# EUROPÄISCHE PATENTSCHRIFT

(11) **EP 3 500 737 B1**
(45) Veröffentlichungstag und Bekanntmachung des Hinweises auf die Patenterteilung: **07.10.2020**
(21) Anmeldenummer: 17752127.5
(22) Anmeldetag: 15.08.2017
(51) Int. Cl.: F01N 3/10, F01N 3/20, F01N 3/28, F01N 5/02, F28D 1/00

(54) **KOMPONENTE EINES ABGASSYSTEMS UND VERFAHREN ZUR ABGASNACHBEHANDLUNG**
COMPONENT OF AN EXHAUST SYSTEM AND METHOD OF EXHAUST GAS AFTERTREATEMENT
COMPOSANTE D'UN SYSTÈME DES GAZ D'ÉCHAPPEMENT ET PROCÉDÉ DE POST-TRAITEMENT DES GAZ D'ÉCHAPPEMENT

(30) Priorität: 16.08.2016 DE 102016215290
(43) Veröffentlichungstag der Anmeldung: 26.06.2019
(73) Patentinhaber: Vitesco Technologies GmbH, 30165 Hannover (DE)
(72) Erfinder: HIRTH, Peter, 51503 Rösrath (DE); PABST, Christoph, 49326 Melle (DE); SCHORN, Christian, 53797 Lohmar (DE); ZIENICKE, Egbert, 53797 Lohmar (DE)
(86) Internationale Anmeldenummer: PCT/EP2017/070655
(87) Internationale Veröffentlichungsnummer: WO 2018/033529

(56) Entgegenhaltungen:
- DE-A1-102008 044 711
- DE-A1-102008 044 711
- DE-B- 1 215 852
- DE-B- 1 215 852
- GB-A- 413 967
- GB-A- 413 967

## Beschreibung

Die vorliegende Erfindung betrifft eine Komponente eines Abgassystems und ein Verfahren zur Abgasnachbehandlung. Das Abgassystem ist insbesondere einer Verbrennungskraftmaschine zugeordnet.

Bei modernen Verbrennungskraftmaschinen ist in allen Betriebspunkten eine wirksame Abgasbehandlung erforderlich. Insbesondere ist die Entfernung von Schadstoffen auch bei niedrigen Temperaturen und bereits kurz nach einem Starten der Verbrennungskraftmaschine sicherzustellen. Dabei sind zahlreiche Vorrichtungen bekannt, die z. B. mittels Wärmetauschern eine Erhöhung einer Abgastemperatur bewirken können, so dass eine für die katalytische Umwandlung von Schadstoffen erforderliche Temperatur schneller erreicht wird. Ein Wärmetauscher kann auch zu der Rückgewinnung von Energie, nämlich aus der Wärme des Abgases, eingesetzt werden.

Gerade der Einsatz von Wärmetauschern erfordert jedoch bisher einen Platzbedarf, der z. B. in Kraftfahrzeugen nur mit erheblichem konstruktivem Aufwand bereitgestellt werden kann. Zudem haben bekannte Wärmetauscher zum Teil Nachteile hinsichtlich eines effizienten Wärmeübergangs.

Die DE 12 15 852 B offenbart eine Einrichtung zum Reinigen von Abgasen durch katalytische Nachverbrennung, bestehend aus einer zylindrischen Reaktionskammer mit darin angeordnetem Katalytelement sowie einem Röhrenwärmeaustauscher zum Aufheizen der zu reinigenden durch die gereinigten Abgase, wobei in der Reaktionskammer koaxial ein hohlzylindrisches Katalytelement und in diesem Hohlzylinder oder um ihn herum von den gereinigten Abgasen umströmte, von den zu reinigenden Abgasen durchströmte Wärmeaustauscherröhren vorzugsweise achsparallel angeordnet sind. Die DE 10 2008 044711 A1 offenbart eine Komponente eines Abgassystems einer Verbrennungskraftmaschine, wobei die Komponente zumindest ein Gehäuse mit einem Einlass und einem Auslass für ein Abgas sowie zumindest einen Einlauf und einen Auslauf für ein Medium aufweist, wobei die Komponente weiterhin einen von dem Abgas umströmbaren Wärmetauscher mit einer ersten thermischen Masse und einen von dem Abgas durchströmbaren Katalysatorkörper mit einer zweiten thermischen Masse aufweist, wobei der Wärmetauscher mindestens einen ersten Strömungspfad für das Medium aufweist und wobei Wärmetauscher und Katalysatorkörper in dem Gehäuse gemeinsam angeordnet sind

Die GB 413 967 A offenbart eine katalytische Vorrichtung zur Reinigung von Abgas mit einer katalytischen Kammer und einer weiteren Kammer, in welcher das Abgas mit Luft, welche durch eine Düse hinzugegeben wird, vermischt wird. Wobei die katalytische Kammer und die Mischkammer ineinander angeordnet sind.

Aufgabe der Erfindung ist es daher, die mit Bezug auf den Stand der Technik geschilderten Probleme zumindest teilweise zu lösen und insbesondere eine Komponente eines Abgassystems bereitzustellen, durch die Abgas erwärmt bzw. Energie aus dem Abgas zurückgewonnen kann und insbesondere auch Schadstoffe im Abgas reduziert bzw. umgesetzt werden kann. Weiter soll die Komponente platzsparend ausgeführt sein. Das Verfahren zur Abgasbehandlung soll einen effizienten Wärmeübergang und/oder eine effektive Abgasbehandlung ermöglichen.

Diese Aufgaben werden gelöst mit einer Komponente gemäß den Merkmalen des unabhängigen Patentanspruchs 1 sowie durch ein Verfahren gemäß Patentanspruch 10 . Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Vorgeschlagen wird in diesem Zusammenhang eine Komponente eines Abgassystems einer Verbrennungskraftmaschine, wobei die Komponente zumindest ein Gehäuse mit einen Einlass und einem Auslass für ein Abgas aufweist. In dem Gehäuse ist ein von Abgas ausgehend von dem Einlass entlang einer axialen Richtung und entlang eines ersten Strömungspfades durchströmbarer, ringförmiger Wärmetauscher vorgesehen. Stromabwärts des Wärmetauschers ist zudem ein in radialer Richtung innerhalb des Wärmetauschers angeordneter, von Abgas zumindest entlang einer radialen Richtung durchströmbarer, ringförmiger Katalysatorkörper so angeordnet ist, dass das Abgas stromabwärts des Katalysatorkörpers den Wärmetauscher entlang der radialen Richtung und entlang eines zweiten Strömungspfades durchströmt, wobei stromaufwärts des ersten Strömungspfades oder in einer Umlenkzone eine Zugabevorrichtung für ein Reduktionsmittel angeordnet ist.

Der Wärmetauscher wird insbesondere von Wärmetauschermedien (Abgas, das entlang des jeweils anderen Strömungspfades strömt; Kühlmedium, z. B. Wasser, Öl, etc.) durchströmt. Insbesondere wird Wärme zwischen heißem Abgas und einem kühleren Wärmetauschermedium übertragen.

Die Komponente kann dazu bestimmt bzw. derart eingerichtet sein, dass in dem Wärmetauscher Wärme zwischen Abgasströmen (entlang des ersten Strömungspfades und entlang des zweiten Strömungspfades) übertragen wird. In diesem Fall kann z. B. das entlang des ersten Strömungspfades strömende Abgas durch das entlang des zweiten Strömungspfades strömende Abgas, welches bereits durch die exotherme Reaktion des Abgases mit den katalytisch wirkenden Bestandteilen des Katalysatorkörpers aufgeheizt ist, erwärmt werden. In diesem Fall weist der Wärmetauscher insbesondere keine zusätzlichen Leitungen zur Aufnahme eines weiteren (zusätzlich zu den beschriebenen Abgasströmungen) Kühlmediums auf.

Soweit hier zur Beschreibung der Form von Wärmetauscher und/oder Katalysatorkörper und/oder Abströmkanal auf den Begriff "ringförmig" zurückgegriffen wird, ist damit gemeint, dass der Wärmetauscher bzw. der Katalysatorkörper bzw. Abströmkanal zentral offen und um eine Zentrumsachse herum umlaufend bzw. umschließend ausgeführt ist. Der Querschnitt des Wärmetauschers und/oder Katalysatorkörpers und/oder Abströmkanal muss dabei nicht kreisrund sein, sondern kann neben kreisförmig auch nach Art eines geschlossenen Vielecks, eines Ovals oder dergleichen geformt bzw. aus Modulen zusammengesetzt sein.

Weiter wird vorgeschlagen, dass z. B. der Wärmetauscher elektrisch beheizbar aufgeführt ist. Insbesondere kann so entlang des ersten Strömungspfades strömendes Abgas erwärmt werden, damit in dem Katalysatorkörper eine katalytische Reaktion erstmals einsetzt. Alternativ oder zusätzlich kann eine elektrische Heizung im Bereich des Katalysatorkörpers angeordnet sein, so dass zumindest lokal eine katalytische Reaktion mit dem entlang des zweiten Strömungspfades strömenden Abgases erreicht wird.

Die Anordnung eines in einer radialen Richtung durchströmbaren Katalysatorkörpers, der z. B. aus der DE 101 17 086 A bekannt ist, innerhalb eines Wärmetauschers ermöglicht eine platzsparende Konstruktion der Komponente. Weiter lässt sich so an der äußeren Umfangsfläche des radial durchströmbaren Katalysatorkörpers eine große Übertragungsfläche für die thermische Energie realisieren, die durch die katalytische Reaktion des Abgases bereitgestellt wird. Aufgrund des sich in radialer Richtung hin zur äußeren Umfangsfläche erweiternden Strömungsquerschnitts kann der durch die Integration des Wärmetauschers bewirkte Druckverlust minimiert werden.

Die Temperatur des Abgases bei Eintritt in den Katalysatorkörper kann durch den Wärmetauscher gesteigert werden, so dass ein Betrieb des Abgassystems bei geringeren Abgastemperaturen möglich ist, sobald eine so genannte "light-off"-Temperatur (die Temperatur, bei der eine katalytische und exotherme Reaktion mit Bestandteilen des Abgases eintritt) einmal erreicht ist. Damit können Maßnahmen zur Steigerung der Temperatur des Abgases, z. B. motorische Maßnahmen, elektrisches Heizen, reduziert oder sogar eingespart werden.

Insbesondere umgibt ein ringförmiger Abströmkanal den Wärmetauscher in der radialen Richtung außen, so dass das Abgas stromabwärts von dem zweiten Strömungspfad in den Abströmkanal eintritt und über einen Auslass das Gehäuse verlässt.

Insbesondere erstreckt sich das Gehäuse entlang der axialen Richtung zwischen dem an einer ersten Stirnseite des Gehäuses angeordnetem Einlass und dem an einer zweiten Stirnseite des Gehäuses angeordnetem Auslass.

Gemäß einer bevorzugten Ausgestaltung ist stromabwärts des ersten Strömungspfades eine Umlenkzone zur Umlenkung des Abgases in eine entgegengesetzte axiale Richtung angeordnet; wobei in der radialen Richtung innerhalb des Katalysatorkörpers ein sich in der axialen Richtung erstreckender zentraler Kanal angeordnet ist, in den das Abgas ausgehend von der Umlenkzone eintritt und von dem aus das Abgas in den Katalysatorkörper eintritt.

Stromaufwärts des ersten Strömungspfades oder in der Umlenkzone ist eine Zugabevorrichtung für ein (bevorzugt flüssiges) Reduktionsmittel angeordnet. Insbesondere ist die Zugabevorrichtung stromaufwärts und außerhalb des Gehäuses, z. B. in einer Abgasleitung, angeordnet.

Die Zugabevorrichtung ist zur Zugabe eines Reduktionsmittels, z. B. Harnstoff-Wasser-Lösung oder Kraftstoff, vorgesehen.

Insbesondere weist der Katalysatorkörper eine Vielzahl von Strömungskanälen zur Durchleitung des Abgases auf, wobei sich die Strömungskanäle zumindest entlang der radialen Richtung und der axialen Richtung erstrecken, insbesondere unter einem Winkel gegenüber den axialen Richtungen von mindestens 60° [Winkelgrad], bevorzugt mindestens 80°. Ggf. können sich die Strömungskanäle zusätzlich entlang einer Umfangsrichtung erstrecken. Insbesondere werden so die Strömungskanäle innerhalb des Katalysatorkörpers verlängert, so dass eine Wahrscheinlichkeit der Kontaktierung von Schadstoffen des Abgases mit den katalytisch wirksamen Bestandteilen des Katalysatorkörpers erhöht wird.

Gemäß einer weiteren bevorzugten Ausgestaltung weisen entlang des ersten Strömungspfades das Abgas kontaktierende Oberflächen des Wärmetauschers eine strukturierte und damit gegenüber einer ebenen Oberfläche vergrößerte Oberfläche auf. Eine strukturierte Oberfläche kann insbesondere durch eine gegenüber anderen Bereichen der Komponente erhöhte Oberflächenrauigkeit und/ oder eine wellenförmige Oberfläche gebildet sein. Die Struktur hat die Eigenschaft, eine Vergrößerung einer Oberfläche gegenüber einer flachen/ebenen/glatten Oberfläche zu bewirken.

Insbesondere weisen entlang des zweiten Strömungspfades das Abgas kontaktierende Oberflächen des Wärmetauschers eine strukturierte und damit gegenüber einer ebenen Oberfläche vergrößerte Oberfläche auf. Die Ausführungen zu dem ersten Strömungspfad gelten hier gleichermaßen.

Insbesondere wird der Wärmetauscher von einem Wärmetauschermedium (insbesondere einem weiteren, nicht das Abgas umfassenden Wärmetauschermedium) nur entlang der axialen Richtung durchströmt.

Gemäß einer bevorzugten Ausgestaltung weist zumindest eine der folgenden Komponenten stromabwärts des Katalysatorkörpers eine katalytische Beschichtung auf:
- Oberflächen des Wärmetauschers entlang des zweiten Strömungspfades;
- ringförmiger Abströmkanal, der den Wärmetauscher in der radialen Richtung außen umgibt, so dass das Abgas stromabwärts des zweiten Strömungspfades in den Abströmkanal eintritt und über einen Auslass das Gehäuse verlässt .

Es wird weiter ein Verfahren zur Abgasnachbehandlung für eine Verbrennungskraftmaschine vorgeschlagen, wobei ein Abgas in den folgenden Schritten, insbesondere in der neu vorgeschlagenen Komponente, behandelt wird:
a. Eintritt des Abgases in einen Einlass eines Gehäuses einer Komponente eines Abgassystems;
b. Führung des Abgases entlang einer axialen Richtung und entlang eines ersten Strömungspfades durch einen ringförmigen Wärmetauscher;
c. Umlenkung des Abgases in einen zentralen Kanal, der in einer radialen Richtung innerhalb des Wärmetauschers angeordnet ist und sich entlang der axialen Richtung erstreckt;
d. Zugabe von Reduktionsmittel mittels einer Zugabevorrichtung und Umlenkung des Abgases aus dem zentralen Kanal in eine radiale Richtung;
e. Eintritt des Abgases in einen, zumindest entlang einer radialen Richtung durchströmbaren, ringförmigen Katalysatorkörper, so dass das Abgas stromabwärts des Katalysatorkörpers den Wärmetauscher entlang der radialen Richtung und entlang eines zweiten Strömungspfades durchströmt.

Insbesondere umgibt ein ringförmiger Abströmkanal den Wärmetauscher in der radialen Richtung außen, wobei das Abgas in einem Schritt f. stromabwärts des zweiten Strömungspfades in den Abströmkanal und entlang der axialen Richtung hin zu einem Auslass des Gehäuses der Komponente geleitet wird.

Die Ausführungen zu der Komponente gelten gleichermaßen für das Verfahren und umgekehrt.

Es wird weiter ein Kraftfahrzeug vorgeschlagen, zumindest umfassend eine Verbrennungskraftmaschine sowie ein Abgassystem mit einer erfindungsgemäßen Komponente oder mit einer Komponente, in der das Abgas nach dem erfindungsgemäßen Verfahren behandelt wird.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: ein Kraftfahrzeug mit einer Verbrennungskraftmaschine und einem Abgassystem und einer beispielhaften Ausführungsvariante einer Komponente in einer Seitenansicht im Schnitt; und
- Fig. 2:: eine erfindungsgemäße Ausführungsvariante einer Komponente in einer Seitenansicht im Schnitt.

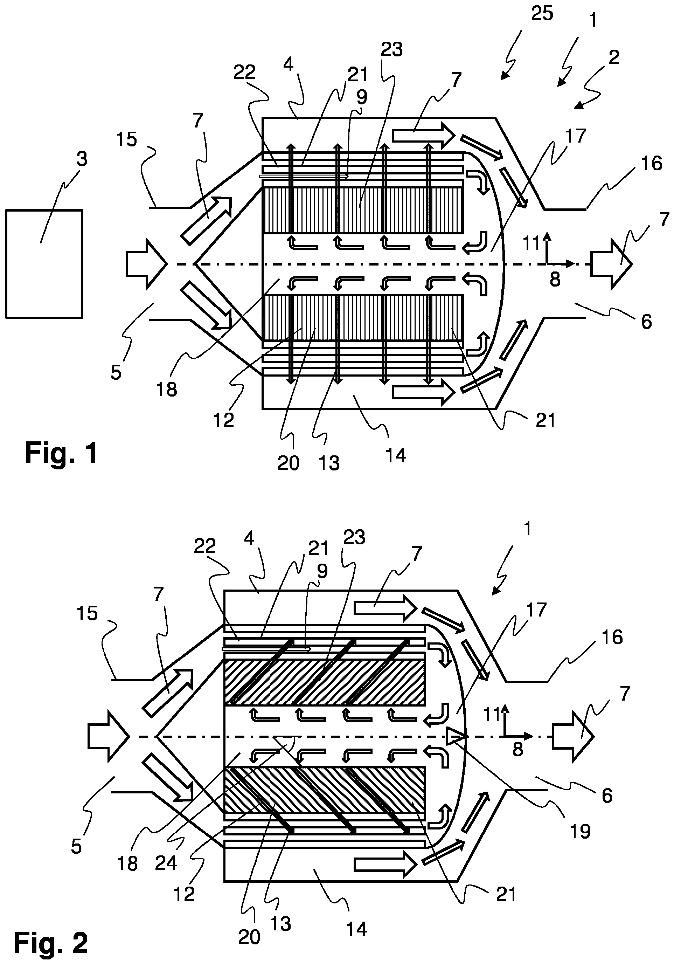

Fig. 1 zeigt Kraftfahrzeug 25 mit einer Verbrennungskraftmaschine 3 und einem Abgassystem 2 und einer ersten beispielhaften Variante einer Komponente 1 in einer Seitenansicht im Schnitt, welche keine erfindungsgemäße Zugabevorrichtung 19 in der Umlenkzone 17 aufweist, wie es in der erfindungsgemäßen Ausführung der Figur 2 gezeigt ist. Der restliche Aufbau und die beschriebene Funktionsweise der Komponente 1, insbesondere die Anordnung und Ausrichtung der Strömungskanäle 20, ist mit den erfindungsgemäßen Merkmalen der Figur 2 kombinierbar. Ein Abgas 7 strömt ausgehend von einer Verbrennungskraftmaschine 3 über einen Einlass 5 in das Gehäuse 4 der Komponente 1 ein. Die Komponente 1 weist das Gehäuse 4 mit einen Einlass 5 und einem Auslass 6 für das Abgas 7 auf. In dem Gehäuse 4 sind ein, von dem Abgas 7 ausgehend von dem Einlass 5 entlang einer axialen Richtung 8 und entlang eines ersten Strömungspfades 9 durchströmbarer, ringförmiger Wärmetauscher 10 und stromabwärts des Wärmetauschers 10 ein in einer radialen Richtung 11 innerhalb des Wärmetauschers 10 angeordneter, von dem Abgas 7 zumindest entlang einer radialen Richtung 11 durchströmbarer, ringförmiger Katalysatorkörper 12 angeordnet. Das Abgas 7 durchströmt stromabwärts des Katalysatorkörpers 12 den Wärmetauscher 10 entlang der radialen Richtung 11 und entlang eines zweiten Strömungspfades 13.

Die Temperatur des Abgases 7 bei Eintritt in den Katalysatorkörper 12 kann durch den Wärmetauscher 10 gesteigert werden, so dass ein Betrieb des Abgassystems 2 bei geringeren Abgastemperaturen möglich ist, sobald eine light-off Temperatur (Temperatur, bei der eine katalytische und exotherme Reaktion mit Bestandteilen des Abgases 7 eintritt) einmal erreicht ist. Damit können Maßnahmen zur Steigerung der Temperatur des Abgases 7, z. B. motorische Maßnahmen, elektrisches Heizen, eingespart werden.

Ein ringförmiger Abströmkanal 14 umgibt den Wärmetauscher 10 in der radialen Richtung 11 außen, so dass das Abgas 7 stromabwärts von dem zweiten Strömungspfad 13 in den Abströmkanal 14 eintritt und über einen Auslass 6 das Gehäuse 4 verlässt.

Das Gehäuse 4 erstreckt sich entlang der axialen Richtung 8 zwischen dem, an einer ersten Stirnseite 15 des Gehäuses 4 angeordnetem Einlass 5 und dem, an einer zweiten Stirnseite 16 des Gehäuses 4 angeordnetem Auslass 6.

Stromabwärts des ersten Strömungspfades 9 ist eine Umlenkzone 17 zur Umlenkung des Abgases 7 in eine entgegengesetzte axiale Richtung 8 angeordnet; wobei in der radialen Richtung 11 innerhalb des Katalysatorkörpers 12 ein sich in der axialen Richtung 8 erstreckender zentraler Kanal 18 angeordnet ist, in den das Abgas 7 ausgehend von der Umlenkzone 17 eintritt und von dem aus das Abgas 7 in den Katalysatorkörper 12 eintritt. Der Katalysatorkörper 12 weist eine Vielzahl von Strömungskanälen 20 zur Durchleitung des Abgases 7 auf, wobei sich die Strömungskanäle 20 entlang der radialen Richtung 11 erstrecken. Oberflächen 21 des Wärmetauschers 10, die entlang des ersten Strömungspfades 9 das Abgas 7 kontaktieren, weisen eine strukturierte und damit gegenüber einer ebenen Oberfläche vergrößerte Oberfläche auf.

Hier weist der Katalysatorkörper 12 eine katalytisch wirksame Beschichtung 23 zur Umwandlung der im Abgas 7 enthaltenen Schadstoffe auf.

In den Fig. 1 und 2 stellen die Pfeile die Durchströmungsrichtung des Abgases 7 dar. Das Abgas wird dabei in den folgenden Schritten behandelt. In einem Schritt a. tritt das Abgas 7 in den Einlass 5 des Gehäuses 4 der Komponente 1 des Abgassystems 2 ein. In Schritt b. wird das Abgas 7 entlang der axialen Richtung 8 und entlang des ersten Strömungspfades 9 durch den ringförmigen Wärmetauscher 10 geführt. In Schritt c. wird das Abgas 7 in den zentralen Kanal 18 umgelenkt, der in der radialen Richtung 11 innerhalb des Wärmetauschers 10 angeordnet ist und sich entlang der axialen Richtung 8 erstreckt. In Schritt d. wird das Abgas 7 aus dem zentralen Kanal 18 in die radiale Richtung 11 umgelenkt, und im erfindungsgemäßen Verfahren wird über die Zugabevorrichtung 19 ein Reduktionsmittel zugegeben. In Schritt e. tritt das Abgas 7 in den, zumindest entlang der radialen Richtung 11 durchströmbaren, ringförmigen Katalysatorkörper 12, so dass das Abgas 7 stromabwärts des Katalysatorkörpers 12 den Wärmetauscher 10 entlang der radialen Richtung 11 und entlang des zweiten Strömungspfades 13 durchströmt.

Ein ringförmiger Abströmkanal 14 umgibt den Wärmetauscher 10 in der radialen Richtung 11 außen, wobei das Abgas 7 in einem Schritt f. stromabwärts des zweiten Strömungspfades 13 in den Abströmkanal 14 und entlang der axialen Richtung 8 hin zu dem Auslass 6 des Gehäuses 4 der Komponente 1 geleitet wird.

Fig. 2 zeigt eine erfindungsgemäße Ausführungsvariante der Komponente 1 in einer Seitenansicht im Schnitt. Im Unterschied zu Fig. 1 weist die Komponente 1 in der Umlenkzone 17 eine Zugabevorrichtung 19 für ein Reduktionsmittel auf. Weiter erstrecken sich die Strömungskanäle 20 des Katalysatorkörpers 12 entlang der radialen Richtung 11 und der axialen Richtung 8. Die Strömungskanäle erstrecken sich gegenüber der axialen Richtung 8 geneigt um einen Winkel 24. Auf die Ausführungen zu Fig. 1 wird Bezug genommen.

## Patentansprüche

1. Komponente (1) eines Abgassystems (2) einer Verbrennungskraftmaschine (3), wobei die Komponente (1) zumindest ein Gehäuse (4) mit einen Einlass (5) und einem Auslass (6) für ein Abgas (7) aufweist, wobei in dem Gehäuse (4) ein von Abgas (7) ausgehend von dem Einlass (5) entlang einer axialen Richtung (8) und entlang eines ersten Strömungspfades (9) durchströmbarer, ringförmiger Wärmetauscher (10) und stromabwärts des Wärmetauschers (10) ein in einer radialen Richtung (11) innerhalb des Wärmetauschers (10) angeordneter, von Abgas (7) zumindest entlang der radialen Richtung (11) durchströmbarer, ringförmiger Katalysatorkörper (12) so angeordnet ist, dass das Abgas (7) stromabwärts des Katalysatorkörpers (12) den Wärmetauscher (10) entlang der radialen Richtung (11) und entlang eines zweiten Strömungspfades (13) durchströmt, **dadurch gekennzeichnet, dass** stromaufwärts des ersten Strömungspfades (9) oder in einer Umlenkzone (17) eine Zugabevorrichtung (19) für ein Reduktionsmittel angeordnet ist.

2. Komponente (1) nach Anspruch 1, wobei ein ringförmiger Abströmkanal (14) den Wärmetauscher (10) in der radialen Richtung (11) außen umgibt, so dass das Abgas (7) stromabwärts des zweiten Strömungspfades (13) in den Abströmkanal (14) eintritt und über einen Auslass (6) das Gehäuse (4) verlässt.

3. Komponente (1) nach einem der vorhergehenden Ansprüche, wobei sich das Gehäuse (4) entlang der axialen Richtung (8) zwischen dem, an einer ersten Stirnseite (15) des Gehäuses (4) angeordnetem Einlass (5) und dem, an einer zweiten Stirnseite (16) des Gehäuses (4) angeordnetem Auslass (6) erstreckt.

4. Komponente (1) nach einem der vorhergehenden Ansprüche, wobei stromabwärts des ersten Strömungspfades (9) eine Umlenkzone (17) zur Umlenkung des Abgases (7) in eine entgegengesetzte axiale Richtung (8) angeordnet ist; wobei in der radialen Richtung (11) innerhalb des Katalysatorkörpers (12) ein sich in der axialen Richtung (8) erstreckender zentraler Kanal (18) angeordnet ist, in den das Abgas (7) ausgehend von der Umlenkzone (17) eintritt und von dem aus das Abgas (7) in den Katalysatorkörper (12) eintritt.

5. Komponente (1) nach einem der vorhergehenden Ansprüche, wobei der Katalysatorkörper (12) eine Vielzahl von Strömungskanälen (20) zur Durchleitung des Abgases (7) aufweist, wobei sich die Strömungskanäle (20) zumindest entlang der radialen Richtung (11) und der axialen Richtung (8) erstrecken.

6. Komponente (1) nach einem der vorhergehenden Ansprüche, wobei entlang des ersten Strömungspfades (9) das Abgas (7) kontaktierende Oberflächen (21) des Wärmetauschers (10) eine strukturierte und damit gegenüber einer ebenen Oberfläche vergrößerte Oberfläche (21) aufweisen.

7. Komponente (1) nach einem der vorhergehenden Ansprüche, wobei entlang des zweiten Strömungspfades (13) das Abgas (7) kontaktierende Oberflächen (21) des Wärmetauschers (10) eine strukturierte und damit gegenüber einer ebenen Oberfläche vergrößerte Oberfläche (21) aufweisen.

8. Komponente (1) nach einem der vorhergehenden Ansprüche, wobei der Wärmetauscher (10) von einem Wärmetauschermedium (22) nur entlang der axialen Richtung (8) durchströmt wird.

9. Komponente (1) nach einem der vorhergehenden Ansprüche, wobei zumindest eine der folgenden Komponenten stromabwärts des Katalysatorkörpers (12) eine katalytische Beschichtung (23) aufweist:
- Oberflächen (21) des Wärmetauschers (10) entlang des zweiten Strömungspfades (13);
- ringförmiger Abströmkanal (14), der den Wärmetauscher (10) in der radialen Richtung (11) außen umgibt, so dass das Abgas (7) stromabwärts des zweiten Strömungspfades (13) in den Abströmkanal (14) eintritt und über einen Auslass (6) das Gehäuse (4) verlässt.

10. Verfahren zur Abgasnachbehandlung für eine Verbrennungskraftmaschine (3), wobei ein Abgas (7) zumindest gemäß folgender Schritte behandelt wird:
a. Eintritt des Abgases (7) in einen Einlass (5) eines Gehäuses (4) einer Komponente (1) eines Abgassystems (2);
b. Führung des Abgases (7) entlang einer axialen Richtung (8) und entlang eines ersten Strömungspfades (9) durch einen ringförmigen Wärmetauscher (10);
c. Umlenkung des Abgases (7) in einen zentralen Kanal (18), der in einer radialen Richtung (11) innerhalb des Wärmetauschers (10) angeordnet ist und sich entlang der axialen Richtung (8) erstreckt;
d. Zugabe von Reduktionsmittel mittels einer Zugabevorrichtung und Umlenkung des Abgases (7) aus dem zentralen Kanal (18) in eine radiale Richtung (11);
e. Eintritt des Abgases (7) in einen, zumindest entlang einer radialen Richtung (11) durchströmbaren, ringförmigen Katalysatorkörper (12), so dass das Abgas (7) stromabwärts des Katalysatorkörpers (12) den Wärmetauscher (10) entlang der radialen Richtung (11) und entlang eines zweiten Strömungspfades (13) durchströmt.

11. Verfahren nach Anspruch 10, wobei ein ringförmiger Abströmkanal (14) den Wärmetauscher (10) in der radialen Richtung (11) außen umgibt; wobei das Abgas (7) in einem Schritt f. stromabwärts des zweiten Strömungspfades (13) in den Abströmkanal (14) und entlang der axialen Richtung (8) hin zu einem Auslass (6) des Gehäuses (4) der Komponente (1) geleitet wird.

12. Kraftfahrzeug (25), zumindest umfassend eine Verbrennungskraftmaschine (3) sowie ein Abgassystem (2) mit einer Komponente (1) nach einem der vorhergehenden Ansprüche 1 bis 9 oder mit einer Komponente (1), in der das Abgas nach dem Verfahren nach einem der Ansprüche 10 und 11 behandelt wird.

## Claims

1. Component (1) of an exhaust-gas system (2) of an internal combustion engine (3), wherein the component (1) has at least one housing (4) with an inlet (5) and an outlet (6) for an exhaust gas (7), wherein, in the housing (4), an annular heat exchanger (10), through which exhaust gas (7) can flow starting from the inlet (5) along an axial direction (8) and along a first flow path (9), and, downstream of the heat exchanger (10), an annular catalyst body (12), which is arranged inside the heat exchanger (10) in a radial direction (11) and through which exhaust gas (7) can flow at least along the radial direction (11), are arranged such that, downstream of the catalyst body (12), the exhaust gas (7) flows through the heat exchanger (10) along the radial direction (11) and along a second flow path (13), **characterized in that** a feed device (19) for a reduction medium is arranged upstream of the first flow path (9) or in a deflection zone (17).

2. Component (1) according to Claim 1, wherein an annular outflow channel (14) surrounds the heat exchanger (10) outwardly in the radial direction (11) such that the exhaust gas (7) enters the outflow channel (14) downstream of the second flow path (13) and exits the housing (4) via an outlet (6).

3. Component (1) according to any of the preceding claims, wherein the housing (4) extends along the axial direction (8) between the inlet (5), which is arranged on a first end face (15) of the housing (4), and the outlet (6), which is arranged on a second end face (16) of the housing (4) .

4. Component (1) according to any of the preceding claims, wherein a deflection zone (17) for deflecting the exhaust gas (7) in an opposing axial direction (8) is arranged downstream of the first flow path (9); wherein a central channel (18) extending in the axial direction (8) is arranged inside the catalyst body (12) in the radial direction (11), and the exhaust gas (7) enters said central channel (18) from the deflection zone (17) and enters the catalyst body (12) from said central channel (18) .

5. Component (1) according to any of the preceding claims, wherein the catalyst body (12) comprises a plurality of flow channels (20) for conducting the exhaust gas (7) through, wherein the flow channels (20) extend at least along the radial direction (11) and the axial direction (8) .

6. Component (1) according to any of the preceding claims, wherein, along the first flow path (9), those surfaces (21) of the heat exchanger (10) which make contact with the exhaust gas (7) have a structured surface (21) which is therefore larger than a flat surface.

7. Component (1) according to any of the preceding claims, wherein, along the second flow path (13), those surfaces (21) of the heat exchanger (10) which make contact with the exhaust gas (7) have a structured surface (21) which is therefore larger than a flat surface.

8. Component (1) according to any of the preceding claims, wherein a heat exchanger medium (22) flows through the heat exchanger (10) only along the axial direction (8).

9. Component (1) according to any of the preceding claims, wherein at least one of the following components downstream of the catalyst body (12) has a catalytic coating (23):
- surfaces (21) of the heat exchanger (10) along the second flow path (13);
- annular outflow channel (14) which surrounds the heat exchanger (10) outwardly in the radial direction (11), such that the exhaust gas (7) enters the outflow channel (14) downstream of the second flow path (13) and exits the housing (4) via an outlet (6) .

10. Method for exhaust-gas aftertreatment for an internal combustion engine (3), wherein an exhaust gas (7) is treated at least according to the following steps:
a. entry of the exhaust gas (7) into an inlet (5) of a housing (4) of a component (1) of an exhaust-gas system (2);
b. guidance of the exhaust gas (7) along an axial direction (8) and along a first flow path (9) through an annular heat exchanger (10);
c. deflection of the exhaust gas (7) into a central channel (18) which is arranged inside the heat exchanger (10) in a radial direction (11) and extends along the axial direction (8);
d. feed of reduction medium by means of a feed device and deflection of the exhaust gas (7) from the central channel (18) into a radial direction (11);
e. entry of the exhaust gas (7) into an annular catalyst body (12) which can be flowed through at least along a radial direction (11), such that, downstream of the catalyst body (12), the exhaust gas (7) flows through the heat exchanger (10) along the radial direction (11) and along a second flow path (13).

11. Method according to Claim 10, wherein an annular outflow channel (14) surrounds the heat exchanger (10) outwardly in the radial direction (11); wherein, in a step f, the exhaust gas (7) enters the outflow channel (14) downstream of the second flow path (13) and is conducted along the axial direction (8) towards an outlet (6) of the housing (4) of the component (1).

12. Motor vehicle (25) at least comprising an internal combustion engine (3) and an exhaust-gas system (2) with a component (1) according to any of the preceding Claims 1 to 9 or with a component (1) in which the exhaust gas is treated in accordance with the method according to either of Claims 10 and 11.

## Revendications

1. Composant (1) d'un système de gaz d'échappement (2) d'un moteur à combustion (3), le composant (1) comprenant au moins un boîtier (4) avec une entrée (5) et une sortie (6) pour un gaz d'échappement (7), un échangeur de chaleur annulaire (10), pouvant être traversé par le gaz d'échappement (7) à partir de l'entrée (5) le long d'une direction axiale (8) et le long d'un premier chemin d'écoulement (9), étant agencé dans le boîtier (4) et un corps catalytique annulaire (12), agencé dans une direction radiale (11) à l'intérieur de l'échangeur de chaleur (10), pouvant être traversé par le gaz d'échappement (7) au moins le long de la direction radiale (11), étant agencé en aval de l'échangeur de chaleur (10), de telle sorte que le gaz d'échappement (7) traverse en aval du corps catalytique (12) l'échangeur de chaleur (10) le long de la direction radiale (11) et le long d'un deuxième chemin d'écoulement (13), **caractérisé en ce qu'**un dispositif d'ajout (19) pour un réducteur est agencé en amont du premier chemin d'écoulement (9) ou dans une zone de déviation (17).

2. Composant (1) selon la revendication 1, dans lequel un canal d'effluent annulaire (14) entoure à l'extérieur l'échangeur de chaleur (10) dans la direction radiale (11), de telle sorte que le gaz d'échappement (7) entre en aval du deuxième chemin d'écoulement (13) dans le canal d'effluent (14) et quitte le boîtier (4) par l'intermédiaire d'une sortie (6).

3. Composant (1) selon l'une quelconque des revendications précédentes, dans lequel le boîtier (4) s'étend le long de la direction axiale (8) entre l'entrée (5) agencée au niveau d'un premier côté frontal (15) du boîtier (4) et la sortie (6) agencée au niveau d'un deuxième côté frontal (16) du boîtier (4) .

4. Composant (1) selon l'une quelconque des revendications précédentes, dans lequel une zone de déviation (17) pour la déviation du gaz d'échappement (7) dans une direction axiale opposée (8) est agencée en aval du premier chemin d'écoulement (9) ; un canal central (18) qui s'étend dans la direction axiale (8) étant agencé dans la direction radiale (11) à l'intérieur du corps catalytique (12), dans lequel le gaz d'échappement (7) entre à partir de la zone de déviation (17) et à partir duquel le gaz d'échappement (7) entre dans le corps catalytique (12).

5. Composant (1) selon l'une quelconque des revendications précédentes, dans lequel le corps catalytique (12) comprend une pluralité de canaux d'écoulement (20) pour l'acheminement du gaz d'échappement (7), les canaux d'écoulement (20) s'étendant au moins le long de la direction radiale (11) et de la direction axiale (8).

6. Composant (1) selon l'une quelconque des revendications précédentes, dans lequel les surfaces (21), en contact avec le gaz d'échappement (7) le long du premier chemin d'écoulement (9), de l'échangeur de chaleur (10) comprennent une surface (21) structurée et ainsi agrandie par rapport à une surface plane.

7. Composant (1) selon l'une quelconque des revendications précédentes, dans lequel les surfaces (21), en contact avec le gaz d'échappement (7) le long du deuxième chemin d'écoulement (13), de l'échangeur de chaleur (10) comprennent une surface (21) structurée et ainsi agrandie par rapport à une surface plane.

8. Composant (1) selon l'une quelconque des revendications précédentes, dans lequel l'échangeur de chaleur (10) est traversé par un milieu échangeur de chaleur (22) uniquement le long de la direction axiale (8).

9. Composant (1) selon l'une quelconque des revendications précédentes, dans lequel au moins un des composants suivants en aval du corps catalytique (12) comprend un revêtement catalytique (23) :
- des surfaces (21) de l'échangeur de chaleur (10) le long du deuxième chemin d'écoulement (13) ;
- le canal d'effluent annulaire (14), qui entoure à l'extérieur l'échangeur de chaleur (10) dans la direction radiale (11), de telle sorte que le gaz d'échappement (7) entre en aval du deuxième chemin d'écoulement (13) dans le canal d'effluent (14) et quitte le boîtier (4) par l'intermédiaire d'une sortie (6).

10. Procédé de post-traitement de gaz d'échappement pour un moteur à combustion (3), dans lequel un gaz d'échappement (7) est traité au moins selon les étapes suivantes :
a. l'entrée du gaz d'échappement (7) dans une entrée (5) d'un boîtier (4) d'un composant (1) d'un système de gaz d'échappement (2) ;
b. le guidage du gaz d'échappement (7) le long d'une direction axiale (8) et le long d'un premier chemin d'écoulement (9) au travers d'un échangeur de chaleur annulaire (10) ;
c. la déviation du gaz d'échappement (7) dans un canal central (18), qui est agencé dans une direction radiale (11) à l'intérieur de l'échangeur de chaleur (10) et s'étend le long de la direction axiale (8) ;
d. l'ajout de réducteur au moyen d'un dispositif d'ajout et la déviation du gaz d'échappement (7) à partir du canal central (18) dans une direction radiale (11) ;
e. l'entrée du gaz d'échappement (7) dans un corps catalytique annulaire (12), pouvant être traversé au moins le long d'une direction radiale (11), de telle sorte que le gaz d'échappement (7) traverse en aval du corps catalytique (12) l'échangeur de chaleur (10) le long de la direction radiale (11) et le long d'un deuxième chemin d'écoulement (13).

11. Procédé selon la revendication 10, dans lequel un canal d'effluent annulaire (14) entoure à l'extérieur l'échangeur de chaleur (10) dans la direction radiale (11) ; le gaz d'échappement (7) étant conduit dans une étape f. en aval du deuxième chemin d'écoulement (13) dans le canal d'effluent (14) et le long de la direction axiale (8) vers une sortie (6) du boîtier (4) du composant (1).

12. Véhicule automobile (25), comprenant au moins un moteur à combustion (3), ainsi qu'un système de gaz d'échappement (2) avec un composant (1) selon l'une quelconque des revendications 1 à 9 précédentes ou avec un composant (1) dans lequel le gaz d'échappement est traité par le procédé selon l'une quelconque des revendications 10 et 11.
